# EUROPEAN PATENT SPECIFICATION

(11) **EP 0 952 036 B1**
(45) Date of publication and mention of the grant of the patent: **18.05.2011**
(21) Application number: 99105544.3
(22) Date of filing: 18.03.1999
(51) Int. Cl.: B60Q 9/00

(54) **Vehicle mounted with engine stopping/starting control system**
Kraftfahrzeuge mit Steuerverfahren zum Abschalten und Anlassen des Motors
Véhicule avec système de commande du démarrage et de l'arrêt du moteur

(30) Priority: 21.04.1998 JP 12542098
(43) Date of publication of application: 27.10.1999
(73) Proprietor: HONDA GIKEN KOGYO KABUSHIKI KAISHA, Tokyo (JP)
(72) Inventor: Toriyama, Masayuki c/o Kabushiki Kaisha Honda Gijutsu Kenkyusho,, Wako-shi, Saitama (JP); Sakamoto, Tomokazu c/o Kabushiki Kaisha Honda Gijutsu Kenkyusho,, Wako-shi, Saitama (JP); Yokoo, Masahide c/o Kabushiki Kaisha Honda Gijutsu Kenkyusho,, Wako-shi, Saitama (JP); Kawaguchi, Kenji c/o Kabushiki Kaisha Honda Gijutsu Kenkyusho,, Wako-shi, Saitama (JP)
(74) Representative: Liska, Horst

(56) References cited:
- US-A- 2 606 626
- US-A- 3 321 663
- PATENT ABSTRACTS OF JAPAN vol. 012, no. 296 (M-731), 12 August 1988 (1988-08-12) -& JP 63 075323 A (MARUICHI ENG KK), 5 April 1988 (1988-04-05)
- PATENT ABSTRACTS OF JAPAN vol. 010, no. 077 (M-464), 26 March 1986 (1986-03-26) -& JP 60 219155 A (AKEBONO BRAKE KOGYO KK), 1 November 1985 (1985-11-01)
- PATENT ABSTRACTS OF JAPAN vol. 007, no. 173 (M-232), 30 July 1983 (1983-07-30) -& JP 58 076356 A (AISHIN KAKOU KK), 9 May 1983 (1983-05-09)

## Description

The present invention relates to a vehicle mounted with an engine stopping/starting control system for automatically stopping an engine upon stopping of the movement of the vehicle and automatically restarting the engine to move the vehicle when a throttle grip is operated in the automatic stopping state, and particularly to a vehicle mounted with an engine stopping/starting control system for generating an alarm for giving caution to a driver when the driver just goes away from the vehicle with the engine left automatically stopped.

An engine stopping/starting control system intended to prevent environmental pollution and achieve energy-saving, particularly, to suppress occurrence of exhaust gas and fuel consumption upon idling, has been disclosed in Japanese Patent Laid-open No. Sho 63-75323. In this system, when a vehicle is stopped, an engine is automatically stopped, and when a throttle grip is actuated in the stopping state of the engine to instruct the movement of the vehicle, the engine is automatically re-started to move the vehicle.

In a vehicle not mounted with the above engine stopping/starting control system, since the engine is operated in an idling state even upon stopping of the movement of the vehicle insofar as a main power source is cut off, there does not occur an inconvenience in which the driver goes apart from the vehicle without turning off the main power source. On the contrary, in the vehicle mounted with the engine stopping/starting control system, since the engine is automatically stopped simultaneously with stopping of the movement of the vehicle, there may occur the inconvenience in which the driver does apart from the vehicle without turning off the main power source.

On the other hand, in the vehicle mounted with the engine stopping/starting control system, a control unit and the like are in the current-carrying state even in the state in which the engine is automatically stopped in order to start the engine and move the vehicle immediately after the throttle grip is next actuated. Accordingly, if the vehicle is left for a long period of time with the main power source kept turned on, discharge of a battery proceeds.

JP 60 219 155 A shows a vehicle mounted with an engine stopping/starting control system for stopping an engine (200) by turning off a main power switch of the vehicle, and re-starting the engine in stoppage by turning on the main power switch, wherein said system comprises stoppage detecting means (60) for detecting the stopping state of the engine; riding detecting means (54) for detecting whether or not a driver is riding on said vehicle; and alarm means (75) for generating an alarm for giving caution to the driver; wherein said alarm means (75) generates - immediately or within an inherent actuating delay - an alarm when the non-riding state of the driver in the stopped state of the engine is detected. There, engine start and engine stop is done by operating the ignition key.

US-A-3321663 discloses a control system for a motor vehicle, wherein electric power supply to current consuming devices (e.g. parking lights) is turned off when it is detected by a seat switch that the driver has left the vehicle, even if the ignition switch is maintained in ON state.

In JP 58 076 356 A, an alarm is given if the driver leaves the seat and, simultaneously, the parking brake is not activated, so that a warning is given to the driver that the vehicle may roll off by itself unintentionally.

In JP 58 030 440 A, on which the preamble of claim 1 is based, an alarm is given when the driver leaves the seat and the ignition switch of the car is still turned on, to warn the rider that he has forgotten to remove the ignition key.

An object of the present invention is to solve the above-described related art problems and to provide a vehicle mounted with an engine stopping/starting control system which is configured to give caution to a driver who just goes apart from the vehicle without turning off a main power source when an engine is automatically stopped, and preventing the headlamp from being turned off without recognition of the driver.

To achieve the above object, according to the present invention, there is provided a vehicle mounted with an engine stopping/starting control system in accordance with claim 1.

The system comprises stoppage detecting means for detecting the stopping state of the engine; riding detecting means for detecting whether or not a driver is riding on said vehicle; and alarm means for generating an alarm for giving caution to the driver; wherein said alarm means generates an alarm when the non-riding state of the driver in the automatically stopped state of the engine is continued for a first predetermined time or more. Preferably, the first predetermined time is defined by a time-out period of a timer.

The control system is further provided with headlamp control means for detecting that at least one of the automatically stopped states of the engine and the non-riding state of the driver and automatically turning off or weakening the light of a headlamp on the basis of the detected result; wherein the alarm means generates an alarm before the headlamp control means automatically turns off or weakens the light of the headlamp.

Preferably, the alarm generated when the non-riding state of the driver in the stopping state of the engine is continued for the specific time or more is stopped after an elapse of a specific time.

With the vehicule according to the invention, if the non-sitting state continued with the main power source left turned on is detected when the engine is automatically stopped, an alarm is generated on the basis of the discrimination that the driver just goes apart from the vehicle without turning off the main power source, and accordingly, it is possible for the driver to recognize the fact that the main power source is left turned on.

Moreover, since an alarm is generated before the headlamp is automatically turned off or weakened e.g. if the vehicle is in the stopping state, it is possible for the driver to previously recognize the automatic turn-off of the headlamp, that is, to prevent the headlamp from being turned off or weakened without recognition of the driver.

According to an embodiment in which an alarm generated upon detection of the non-riding state of the driver is continued only for a specific time, it is possible to prevent the alarm from being continued for an unnecessary long period of time in the case where it is supposed that the driver goes apart from the vehicle without turning off the main power source, for example, in the case where the vehicle is used for delivery service or bill collection service.

Hereinafter, the present invention will be described in detail with reference to the drawings.

Fig. 1 is a side view of the entire configuration of a scooter-type motorcycle mounted with an engine stopping/starting control system of the present invention.

Fig. 2 is a plan view of an instrument and its neighborhood of the scooter-type motorcycle.

Figs. 3a and 3b are views typically showing the structure of a hinge portion of the front portion of a seat.

Figs. 4a and 4b are sectional views showing a main portion of a throttle grip.

Fig. 5 is a sectional view, taken on line II-II of Eig. 1, showing an internal combustion engine.

Fig. 6 is a block diagram showing the entire configuration of a starting/stopping control system according to one embodiment of the present invention.

Fig. 7 is a block diagram showing the function of a main control unit.

Fig. 8 is a diagram showing main operations of the main control unit.

Fig. 9 is a block diagram showing the entire configuration of a starting/stopping control system according to another embodiment of the present invention.

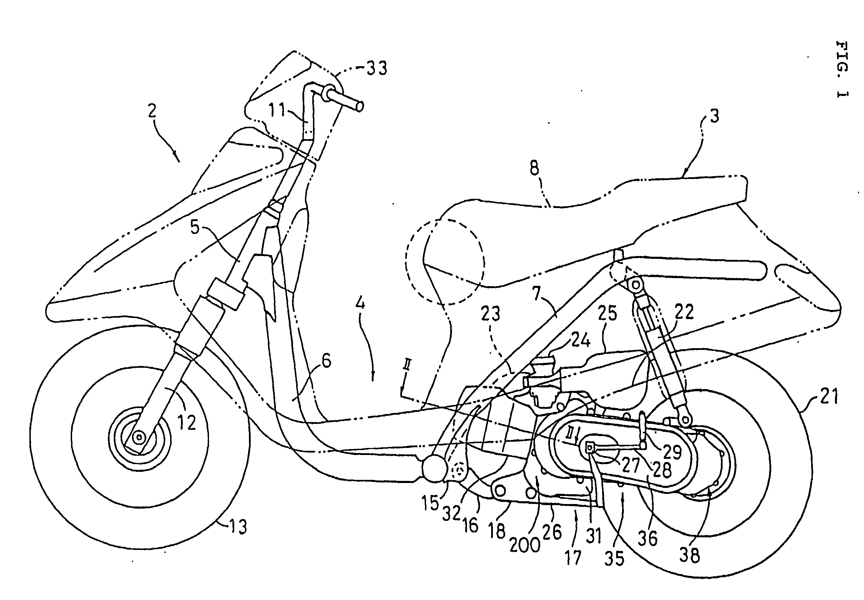

Fig. 1 is a general side view of a scooter-type motorcycle 1 mounted with an engine stopping/starting control system according to one embodiment of the present invention.

A body front 2 is connected to a body rear 3 via a low level floor 4. A body frame constituting a skeleton of a vehicular body is basically composed of a down tube 6 and a main pipe 7. A fuel tank and a containing box (both not shown) are supported by the main pipe 7, and a seat 8 is arranged over the fuel tank and containing box.

At the body front 2, a handle bar 11 is rotatably supported by a steering head 5 in such a manner as to extend upward therefrom and a front fork 12 is rotatably supported by the steering head 5 in such a manner as to extend downward therefrom. A front wheel 13 is rotatably supported by the lower ends of the front fork 13. The upper portion of the handlebar 11 is covered with a handle cover 33 serving as an instrument board. A bracket 15 is projectingly provided on the lower end of a rising portion of the main pipe 7, and a swing unit 17 is swingably connected to and supported by the bracket 15 via a link member 16.

A single-cylinder/two-stroke internal combustion engine 200 is mounted on the front portion of the swing unit 17. A belt type continuously variable transmission 35 provided extending rearward from the engine 200, a reduction mechanism 38 is provided on the rear portion of the transmission 35 via a centrifugal clutch. A rear wheel 21 is rotatably supported by the reduction mechanism 38. A rear cushion 22 is interposed between the upper end of the reduction mechanism 38 and the upper bend portion of the main pipe 7. A carburetor 24 connected to an intake pipe 23 extending from the upper portion of a cylinder head of the engine 200 and an air cleaner 25 connected to the carburetor 24 are arranged over the swing unit 17.

A main stand 26 is pivotably mounted on a hanger bracket 18 projectingly provided on the lower portion of a unit swing case 31. The base end of a kick arm 28 is fixed to a kick shaft 27 projecting from a transmission case cover 36 of the belt type continuously variable transmission 35. A kick pedal 29 is provided at the leading end of the kick arm 28.

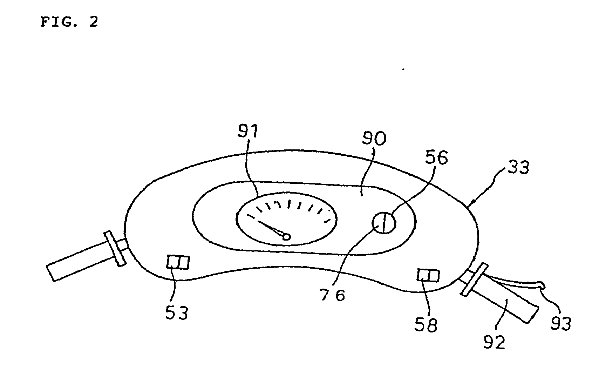

Fig. 2 is a plan view of an instrument panel and its neighborhood of the motorcycle 1. A speed meter 91, a stand-by indicator 56, and a battery indicator 76 are provided in an instrument panel 90 mounted to the handle cover 33. As will be described in detail later, the stand-by indicator 56 flashes when the engine is stopped during control of stopping/starting of the engine for warning the driver of the fact that the present state is a state in which the engine will be started to move the vehicle directly after a throttle is opened. The battery indicator 76 is turned on if a battery voltage is lowered for warning the driver of the lack of charged power of the battery.

The handle cover 33 is also provided with an idle switch 53 for permitting or restricting idling and a starter switch 58 for starting a starter motor. A throttle grip 92 and a brake lever 93 are provided at the right end portion of the handlebar 11. It should be noted that while a horn switch, a winker switch and the like are provided on the roots of the right and left throttle grips like the related art motorcycle, they are not shown in Fig. 2.

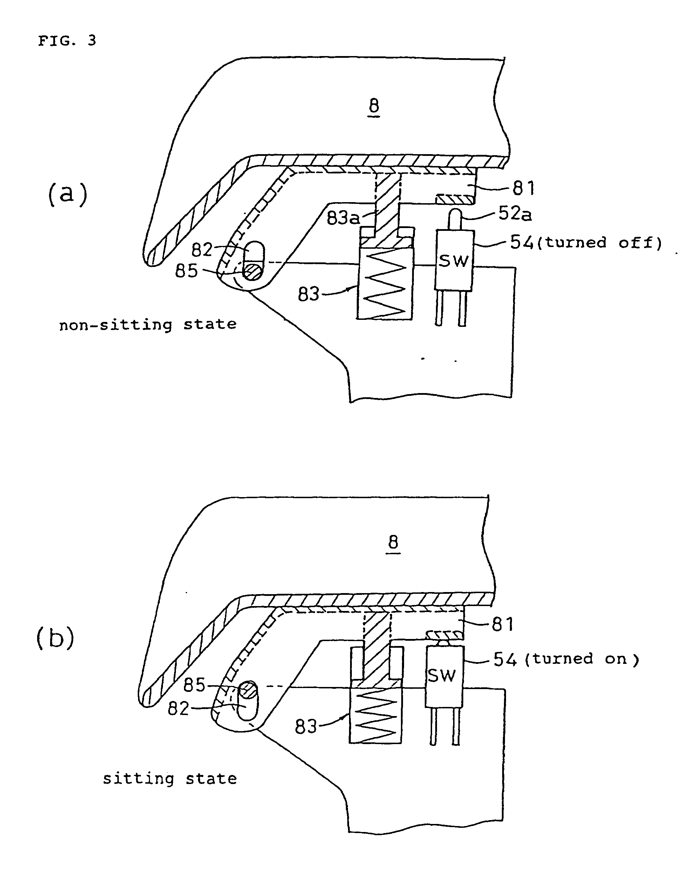

Figs. 3a and 3b typically show the structure of a hinge portion provided at the front of the seat 8, which hinge portion is designated by a round mark depicted by the broken line in Fig. 1. In this embodiment, a hinge member 81, which is fixed on the front of the back face of the seat 8, has an opening 82 elongated in the vertical direction. A hinge shaft 85 fixed on the vehicular body side passes through the elongated opening 82, so that the seat 8 is supported swingably around the hinge shaft 85 and movably in the vertical direction. A coil spring 83 for elastically biasing a pressing piece 83a and a sitting switch 54 are provided on the vehicular body side opposed to the back face of the hinge member 81.

With this configuration, in the non-sitting state in which a driver is not sit in the seat 8, as shown in Fig. 3a, since the seat 8 is pushed up by the coil spring 83 until the hinge shaft 85 is brought in contact with the lower end of the elongated opening 82, the sitting switch 54 is turned into the OFF state.

On the contrary, in the sitting state in which the driver is sit in the seat 8, as shown in Fig. 3b, since the seat 8 is pushed down against the elastic force of the coil spring 83, the sitting switch 54 is turned into the ON state. Accordingly, it can be confirmed whether or not the driver is sitting in the seat 8 by keeping watch on the ON/OFF state of the sitting switch 54. Also, in this embodiment, since the sitting switch 54 is provided on the front side of the seat 8, even if the driver is short in stature, it can be certainly detected whether or not he is sit in the seat 8.

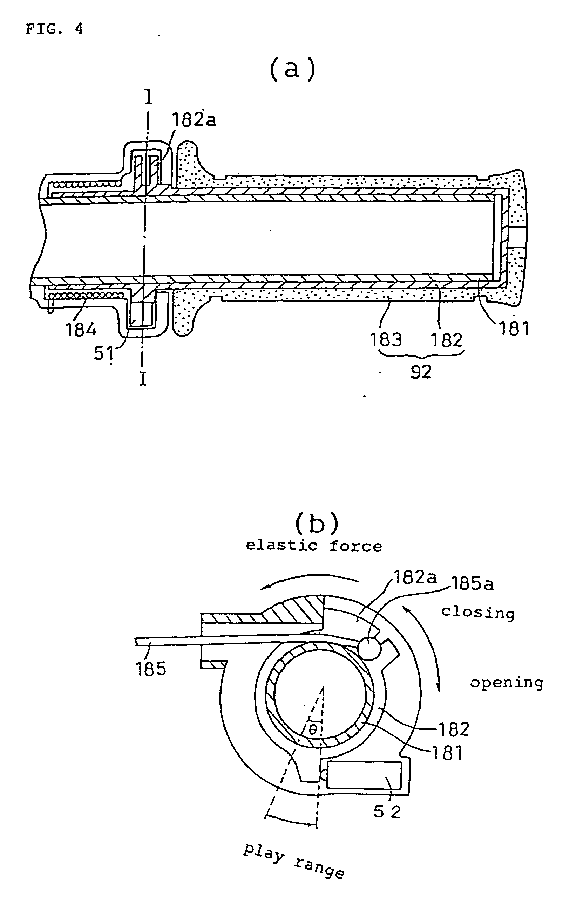

Fig. 4a is a sectional view showing a main portion of the throttle grip 92, and Fig. 4b is a sectional view taken on line I-I of Fig. 4a. As shown in Fig. 4a, a throttle grip main body 182 is turnably inserted around a handle pipe 181 and is covered with a grip cover 183. The throttle grip main body 182 has a flange 182a which projects from the circumference of the throttle grip main body 182. As shown in Fig. 4b, one end 185a of a throttle wire 185 is locked to the flange 182a. The throttle grip main body 182 is usually biased on the accelerator closing side by the elastic force of a spring 184. When the throttle grip main body 182 is twisted in the opening direction against the elastic force of the spring 184, the throttle wird 185 is twisted inward to open the throttle.

In this embodiment, the throttle grip 92 has a throttle switch 52 which is turned off when the throttle grip main body 182 is opened by a predetermined angle. In other words, the throttle switch 52 is turned on in an angle range less than a play angle θ, that is, before the throttle actually begins to be opened. This allows the throttle switch 52 to be turned on without actually opening the throttle. Accordingly, the engine can be operated by the intention of the driver even in the stopping state of the vehicle.

The throttle grip main body 182 is additionally applied with the elastic force of a throttle spring (not shown) when the opening angle of throttle grip main body 182 reaches an angle (> θ) at which the throttle actually begins to be opened, and accordingly, the opening/closing operation of the throttle switch 52 only in the angle range less than the play angle can be easily performed.

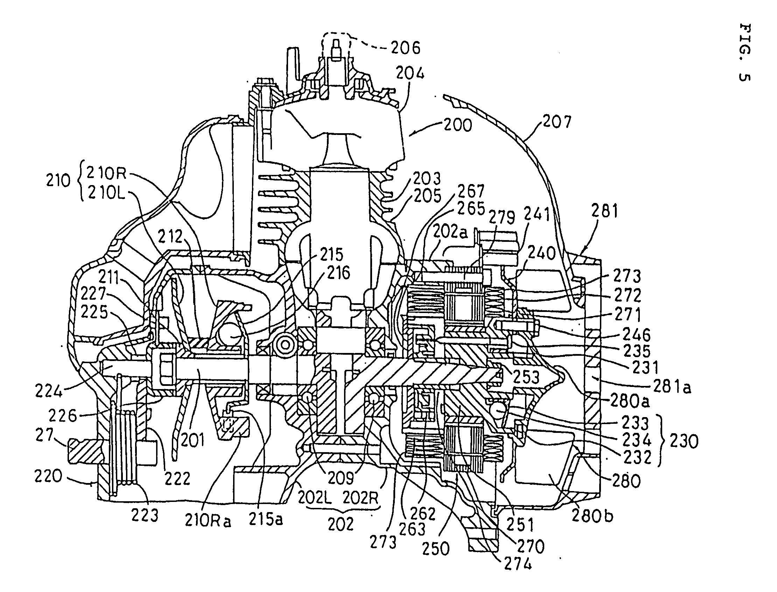

Fig. 5 is a sectional view, taken on line II-II of Fig. 1, showing the internal combustion engine 200. The engine 200 includes a crank case 202 divided into right and left crank cases 202R and 202L for rotatably supporting a crank shaft 201 extending from right to left in the horizontal direction, and a cylinder block 203 and a cylinder head 204 which are sequentially stacked on the crank case 202. The cylinder block 203 has an exhaust passage (not shown), and it also has scavenging passages 205 each having a scavenging port opened in a cylinder bore of the cylinder block 203 so that the cylinder block 203 is communicated to a crank chamber of the crank case 202.

An ignition plug 206 is fitted in the cylinder head 204 in such a manner as to be directed toward a combustion chamber. The cylinder head 204 and the cylinder block 203 are covered with a fan shroud 207 except for the exposed portion of the ignition plug 206. The left crank case 202L serves as a belt-type continuously variable transmission chamber case. A belt drive pulley 210 is rotatably provided around the crank shaft 201 passing through the left crank case 202L.

The belt drive pulley 210 has a fixed side pulley half 210L and a movable side pulley half 210R. The fixed side pulley half 210L is fixed to the left end portion of the crank shaft 201 via a boss 211. The movable side pulley half 210R, positioned on the right side of the fixed side pulley half 210L, is spline-fitted to the crank shaft 201 to be movable close to or apart from the fixed side pulley half 210L. A V-belt 212 is wound between both the pulley halves 210L and 210R.

A cam plate 215, positioned on the right side of the movable side pulley half 210R, is fixed to the crank shaft 201. A slide piece 215a provided at the outer peripheral end of the cam plate 215 is slidably engaged with a cam plate slide boss 210Ra which is axially formed at the outer peripheral end of the movable side pulley half 210R. The side surface, on the cam plate 215 side, of the movable side pulley half 210R is tapered toward the cam plate 215 side, and dry weight rollers 216 are contained in a state being held between the inner surface of the taper portion of the movable side pulley half 210R and the cam plate 215.

As the rotational speed of the crank shaft 201 is increased, the dry weight rollers 216, which are held between the movable side pulley half 210R and the cam plate 215 and are rotated therewith, are moved in the centrifugal direction by the centrifugal force applied thereto. As a result, the movable side pulley half 210R is pushed by the dry weight rollers 216 to be moved leftward, that is, close to the fixed side pulley half 210L, so that the V-belt 212 held between both the pulley halves 210L and 210R is moved in the centrifugal direction. This increases the winding radius of the V-belt 212. The V-belt 212 is wound around the belt drive pulley 210 and also around a belt driven pulley (not shown) provided on the rear side, so that a power is automatically adjusted and is transmitted to the reduction mechanism provided on the rear side via a centrifugal clutch, to thus drive a rear wheel.

A transmission case cover 220, which extends rearward from the belt drive pulley 210 located on the front side, covers from left the belt-type continuously variable transmission chamber. The kick shaft 27 turnably passes through and is supported by the front portion of the transmission case cover 220. A drive helical gear 222 is fitted to the inner end portion of the kick shaft 27 and is biased by a return spring 223. A slide shaft 224 coaxial with the crank shaft 201 is rotatably, axially and slidably supported by the inner surface of the front portion of the transmission case cover 220. A driven helical gear 225 is formed around the slide shaft 224 and meshed with the drive helical gear 222. A ratchet wheel 226 is fixed at the right end of the driven helical gear 225. The ratchet wheel 226, drive helical gear 222, and driven helical gear 225 are biased leftward by a friction spring 227.

A ratchet facing to the ratchet wheel 226 is formed on the boss 211 on the crank shaft 201 side. Both the ratchet and ratchet wheel 226 can be moved close to or apart from each other by sliding motion of the slide shaft 224. When the kick pedal 29 is actuated and the kick shaft 27 is rotated against the return spring 223, the drive helical gear 222 integrated with the kick shaft 27 is rotated, and the driven helical gear 225 meshed with the drive helical gear 222 is slid rightward against the biasing force of the friction spring 227 while being rotated together with the slide shaft 224, so that the ratchet wheel 226 is meshed with the ratchet of the boss 211 to forcibly rotate the crank shaft 201, thus starting the internal combustion engine 200.

The right crank case 202R, formed into an approximately cylindrical shape, extends rightward from a main bearing 209 for rotatably supporting the crank shaft 201. The crank shaft 201 projects along the center axis of the right crank case 202R. A generator/starter 250 including a starter in combination with an AC generator is disposed in the cylinder of the right crank case 202R.

An inner rotor (rotational inner magnetic type rotor) 251 is fitted around a taper portion formed at the leading end of the crank shaft 201 and is fixed thereto with a nut 253. The inner rotor 251 is thus rotated together with the crank shaft 201. Six grooves, each being formed in an arcuate shape in cross-section, are formed in the outer peripheral surface portion of the inner rotor 251. A magnet 271 made from a neodymium-iron-boron alloy is fitted in each of the six grooves.

An outer stator 270 is arranged around the outer periphery of the inner rotor 251 in such a manner that the outer peripheral edge thereof is fastened to and supported by a cylindrical wall 202a of the crank case 202 with a bolt 279. A stator core of the outer stator 270 is composed of steel sheets laminated to each other, and a power generating coil 272 and a starting coil 273 are wound around a plurality of yokes extending toward the center from the annular portion of the outer periphery of the stator core. The power generating coil 272 and the starting coil 273 are wound around the yokes in such a manner as to be offset inward in the axial direction of the crank shaft 201. In other words, the amounts, projecting outward in the axial direction of the crank shaft 201, of the coils 272 and 273 are made small.

The power generating coil 272 and the starting coil 273, which project inward rather than outward in the axial direction within the cylindrical wall 202a of the crank case 202, form an annular inner space in which a rectifying brush mechanism 263 is provided. A brush holder 262, through which the crank shaft 201 passes in the inner space, is fitted to the crank shaft 201 in such a manner as not to be permitted in its relative rotation in the circumferential direction and to be permitted only in its sliding motion in the axial direction. A spring 274 is interposed between the brush holder 262 and the inner rotor 251 for biasing the brush holder 262 inward in the axial direction.

A plurality of brushes 263 are provided at specific positions on the inner surface of the brush holder 262 in such a manner as to project therefrom by the elastic forces of springs. A commutator holder 265 facing to the inner surface of the brush holder 262 is provided in such a manner that its center is penetrated by the crank shaft 201 and its outer peripheral edge is fixedly supported by portions, largely projecting inward in the axial direction, of the power generating coil 272 and the starting coil 273.

Commutator pieces 267 are concentrically arranged at specific positions on the surface, facing to the brush holder 262, of the commutator holder 265. The brush holder 262, which is rotated together with the crank shaft 201, is moved close to or apart from the fixed commutator holder 265. When the brush holder 262 is moved close to the commutator holder 265, each brush 263 is brought in contact with the corresponding commutator piece 267.

The outer portion, in the axial direction of the crank shaft 201, of the inner rotor 251 has an inner cylindrical portion 231 covering the surroundings of the nut 253 screwed in the leading end of the crank shaft 201 and an outer cylindrical portion 232 concentrically covering the inner cylindrical portion 231. Both the cylindrical portions 231 and 232 extend axially outward, to constitute a governor mechanism 230. To be more specific, the inner peripheral surface of the outer cylindrical portion 232 is tapered to constitute a governor outer; a governor inner 233 is axially slidably fitted around the outer periphery of the inner cylindrical portion 231; and balls 234 as a governor weight are interposed between the governor inner 233 and the outer cylindrical portion 232.

A connecting shaft 235 with its one end fixed to the axially movable governor inner 233 of the governor mechanism 230 passes through the inner rotor 251 in parallel to the crank shaft 201, and the leading end of the connecting shaft 235 is fitted to the brush holder 262. In this way, the connecting shaft 235 connecting the governor inner 233 to the brush holder 262 allows both the governor inner 233 and the brush holder 262 to be moved together with each other in the axial direction of the crank shaft 201.

When the crank shaft 201 is stopped, the brush holder 262 is moved inward in the axial direction by the biasing force of the spring 223 to bring the brushes 263 in contact with the commutator pieces 267. In this state, if a current is supplied from the battery, it flows to the starting coil 273 by way of the contact between the brushes 263 and the commutator pieces 267, to generate a rotational torque applied to the inner rotor 251. The rotation of the inner rotor 251 rotates the crank shaft 201, thereby starting the internal combustion engine 200.

As the rotational number of the engine is increased, the balls 234 are moved, by the centrifugal force, in the outer peripheral direction on the inner tapered surface of the outer cylindrical portion 232, so that the governor inner 233 is slid outward in the axial direction. At this time, the brush holder 262 integrated with the connecting shaft 235 is moved outward in the axial direction, and when the rotational number of the engine exceeds a specific value, the brushes 263 are automatically separated from the commutator pieces 267. After that, the charging to the battery is performed by the power generating coil 272.

An annular disk-like rotor 240 for detecting a crank angle is provided on the outer cylindrical portion 232 constituting the main part of the governor mechanism 230 in such a manner that its inner peripheral edge is integrally fitted to the edge portion of the outer cylindrical portion 232. Meanwhile, a pulser 241 is arranged at a specific position in the vicinity of the outer peripheral edge of the rotor 240. The pulser 241 detects serrations formed on the outer peripheral edge of the rotor 240 rotated integrally with the crank shaft 201 via the inner rotor 251, to determine the crank angle. The annular disk-like rotor 240 covers from outside the power generating coil 272 and the starting coil 273 of the outer stator 270. A fan member 280 for forcibly air-cooling the internal combustion engine is integrally provided on the outer side of the rotor 240 in the axial direction.

The base of a central cone portion 280a of the fan member 280 is fixed on the outer cylindrical portion 232 of the inner rotor 251 with a bolt 246. A fan 280b provided on the outer periphery of the central cone portion 280a is erected outside the rotor 240. The fan member 280 is covered with a fan cover 281.

According to the generator/starter for a vehicle in this embodiment, as described above, the rectifying brush mechanism 263 is disposed inward from the inner rotor 251 in the axial direction and the governor mechanism 230 separated from the rectifying brush mechanism 263 is disposed outward from the inner rotor 251 in the axial direction. Accordingly, the amount, protruded outward in the axial direction of the crank shaft, of the generator/starter can be suppressed.

Further, since the power generating coil 272 and the starting coil 273 are wound around the yokes of the stator core of the outer stator 270 in such a manner as to be offset inward in the axial direction, that is, to make small the amounts, projecting outward in the axial direction, of the coils 272 and 273, the rotor 240 and the fan member 280 can be located relatively inward in the axial direction to thereby further make small the amount, projecting outward in the axial direction, of the generator/starter.

Outside air introduced from an outside air suction port 281a of the fan cover 281 by rotation of the fan 280b is spread toward the outer periphery along the central cone portion 280a; however, since the rotor 240 cuts off the introduced air and prevents permeation of the outside air to the generator/starter 250 side, the outside air less permeates to the rectifying brush mechanism 263 located at the back of (axially inward from) the generator/starter 250. This prevents the rectifying brush mechanism 263 from being affected by dust contained in the outside air.

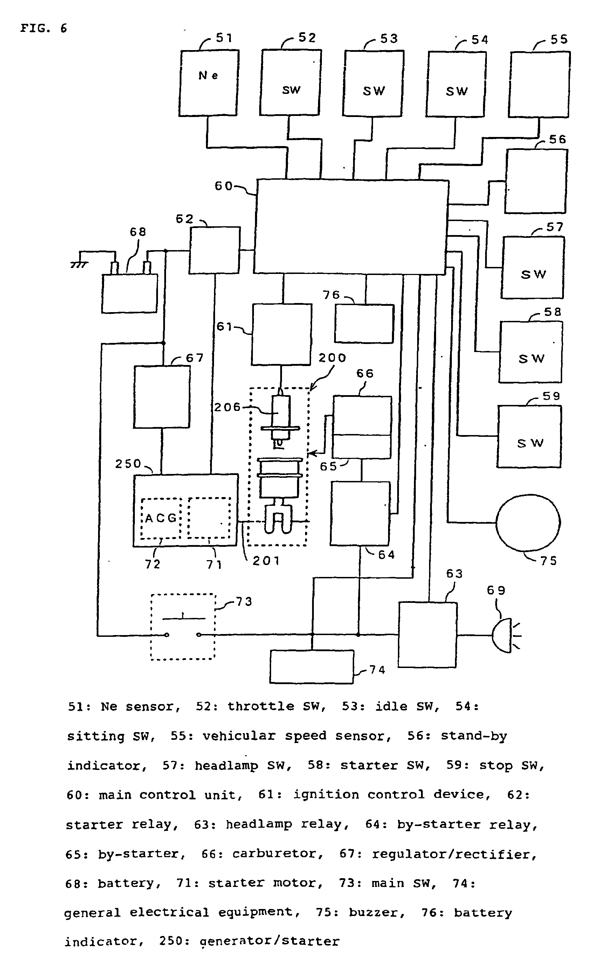

Fig. 6 is a block diagram showing the entire configuration of a starting/stopping control system in the internal combustion engine 200 including the generator/starter 250 for directly rotating the crank shaft 201 as described above. In this figure, the same symbols as those described above designate the same or similar parts.

The engine stopping/starting system in this embodiment includes an operational mode in which idling is restricted and an operational mode in which idling is permitted. To be more specific, the system includes an "engine-stopping/vehicle-moving mode (idling restricting mode)" in which when the vehicle is stopped, the engine is automatically stopped, and when the throttle grip is actuated in the stopping state of the engine, the engine is automatically restarted to move the vehicle, and the system also includes an "engine-starting mode (idling permitting mode)" in which idling is permitted for warming-up upon starting of the engine.

The generator/starter 250 is coaxially connected to the crank shaft 201 of the engine 200. The generator/starter 250 is composed of a starter motor 71 and an AC generator 72. A power generated by the AC generator 72 is charged in a battery 68 via a regulator/rectifier 67. When a starter relay 62 is made conductive, the battery 68 supplies a drive current to the starter motor 71 and also supplies load currents to various electrical equipment 74 and a main control unit 69 via a main switch 73.

To the main control unit 60 are connected an Ne sensor 51 for detecting the rotational number Ne of the engine, the throttle switch 52 which is turned off when a throttle opening exceeds a predetermined value, an idle switch 53 for permitting or restricting idling of the engine 200, the sitting switch 54 which is turned off when a driver is sit in the driver's seat, a vehicular speed sensor 55 for detecting a vehicular speed, the stand-by indicator 56 which flashes upon stopping of the vehicle in the engine-stopping/vehicle-moving mode to be described later, a headlamp switch 57 for turning on/off the headlamp 69, the starter switch 58 for driving the starter motor 71 of the generator/starter 250 to start the engine 200, a stop switch 59 which is turned off in response to a braking operation, and the battery indicator 76 which is turned on when the voltage of the battery 68 is equal to or less than a predetermined value (for example, 10 V) for warning the driver of the lack of the charged power in the battery.

To the main control unit 60 are also connected an ignition control device (including an ignition coil) 61 for igniting the ignition plug 206, a control terminal of the starter relay 62 for supplying a power to the starter motor 71, a control terminal of a headlamp relay 63 for supplying a power to the headlamp 69, a control terminal of a by-starter relay 64 for supplying a power to the by-starter 65 mounted to the carburetor 66, and a buzzer 75 for generating an alarm for giving caution to the driver before the driver goes away from the vehicle without turning off the main switch 73 or the headlamp 69 is automatically turned off.

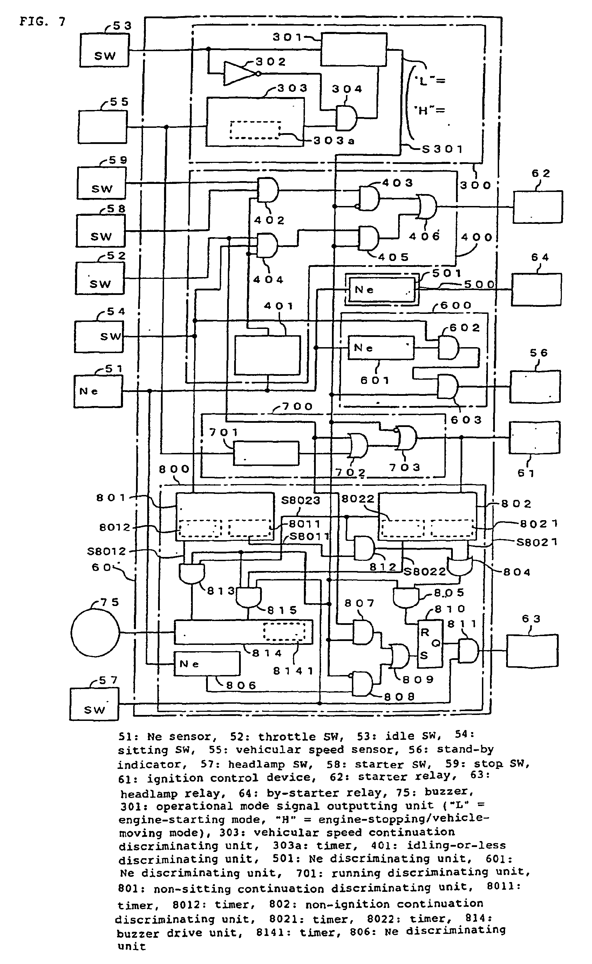

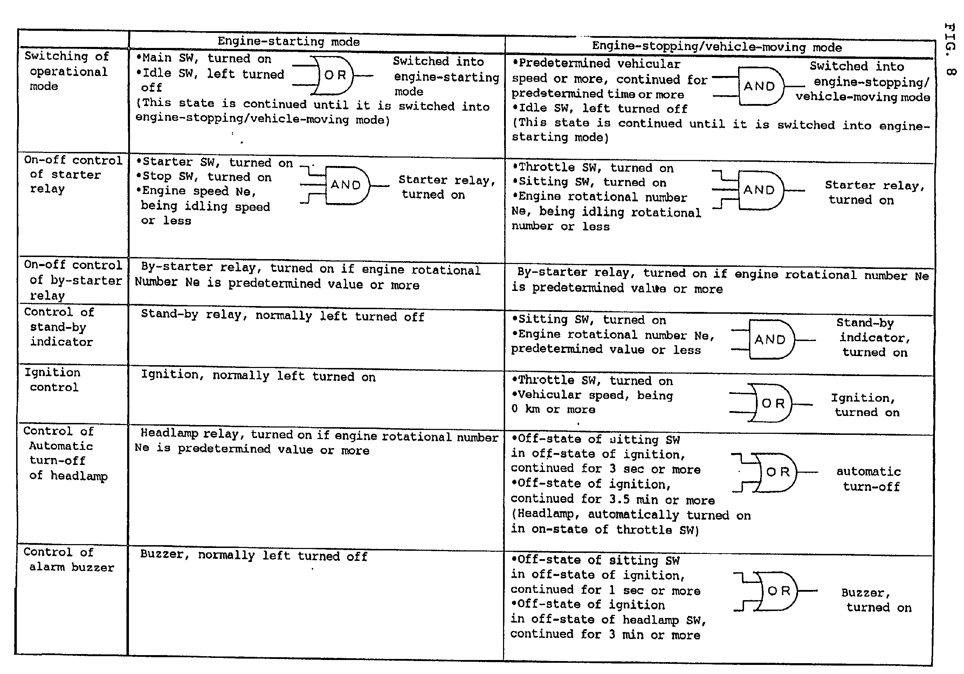

Fig. 7 is a block diagram for concretely showing the configuration of the main control unit 60, in which the same symbols as those described above designate the same or similar parts. Fig. 8 is a diagram showing main operations of the main control unit 60.

An operational mode switching unit 300 switches, the operational mode of the engine stopping/starting control system of the present invention into either the "engine-starting mode" in which idling is permitted or the "engine-stopping/vehicle-moving mode" in which idling is restricted, in accordance with the ON/OFF state of the idle switch 53 and the state of the vehicle.

In the operational mode switching unit 300, a signal indicating the ON/OFF state of the idle switch 53 is inputted in both an operational mode signal outputting unit 301 and an invertor 302. The signal indicating the ON/OFF state of the idle switch 53 indicates an "L" level in the OFF state (restriction of idling) of the idle switch 53 and an "H" level in the ON state (permission of idling) of the idle switch 53. The invertor 302 reversely outputs the signal indicating the ON/OFF state of the idle switch 53.

A vehicular speed continuation discriminating unit 303, which includes a timer 303a, outputs a signal of "H" level when a vehicular speed equal to or more than a predetermined value is detected for a predetermined time or more. An AND circuit 304 outputs a logical product of the output signal from the discriminating unit 303 and the output signal from the invertor 302 to the operational mode signal outputting unit 301.

When the main switch 73 is turned on, the operational mode signal outputting unit 301 starts the "engine-starting mode" in which idling is permitted. If upon the "engine-starting mode", the output signal from the AND circuit 304 indicates the "H" level, that is, the idle switch 53 is turned off and the vehicular speed equal to or more than the predetermined value is detected for the predetermined time or more, the operational mode is shifted from the "engine-starting mode" to the "engine-stopping/vehicle-moving mode" in which idling is restricted. Also, if upon the "engine-stopping/vehicle-moving mode", the idle switch 53 is turned on again, the operational mode is shifted from the "engine-stopping/vehicle-moving mode" to the "engine-starting mode". An operational mode signal S₃₀₁ outputted from the operational mode signal outputting unit 301 indicates the "L" level during the "engine-starting mode" and the "H" level during the "engine-stopping/vehicle-moving mode".

A starter relay control unit 400 allows manual or automatic starting of the starter relay 62 under a specific condition in accordance with the operational mode. In the starter relay control unit 400, a detection signal outputted from the Ne sensor 51 is supplied to an idling-or-less discriminating unit 401. When the rotational number of the engine is equal to or less than a specific idling rotational number (for example, 800 rpm), the discriminating unit 401 outputs a signal of "H" level. An AND circuit 402 outputs a logical product of the output signal from the discriminating unit 401, the signal indicating the ON/OFF state of-the stop switch 59, and the signal indicating the ON/OFF state of the starter switch 58. An AND circuit 403 outputs a logical product of the output signal from the AND circuit 402 and the reversal signal of the operational mode signal S₃₀₁.

An AND circuit 404 outputs a logical product of the output signal from the idling-or-less discriminating unit 401, the signal indicating the ON/OFF state of the throttle switch 52, and the signal indicating the ON/OFF state of the sitting switch 54. An AND circuit 405 outputs a logical product of the output signal from the AND circuit 404 and the operational mode signal S₃₀₁. An OR circuit 406 outputs a logical sum of the output signals from the AND circuits 403 and 405 to the starter relay 62.

With this configuration, since the operational mode signal S₃₀₁ indicates the "L" level during the "engine-starting mode", the AND circuit 403 is turned into an enable state. Accordingly, if the starter switch 58 is turned on by the driver when the rotational number of the engine is equal to or less than the idling rotational number and the stop switch 59 is turned on (during braking operation), the starter relay 62 is made conductive to thereby start the starter motor 71.

On the contrary, the AND circuit 405 is turned into an enable state during the "engine-stopping/vehicle-moving mode". Accordingly, if the rotational number of the engine is equal to or less than the idling rotational number and the sitting switch 54 is turned on (during sitting of the driver in the driver's seat) to open the throttle, the starter relay 62 is made conductive to start the starter motor 71.

In a by-starter control unit 500, the output signal from the Ne sensor 51 is inputted in an Ne discriminating unit 501. The Ne discriminating unit 501 outputs a signal of "H" level if the rotational number of the engine is equal to or more than a predetermined value, to close the by-starter relay 64. With this configuration, even in either of the above operational modes, it is possible to make rich the fuel when the rotational number of the engine is equal to or more than the predetermined value.

In an indicator control unit 600, the output signal from the Ne sensor 51 is inputted in an Ne discriminating unit 601. The Ne discriminating unit 601 outputs a signal of "H" level if the rotational number of the engine is equal to or less than a predetermined value. An AND circuit 602 outputs a logical product of the signal indicating the ON/OFF state of the sitting switch 54 and the output signal from the Ne discriminating unit 601. An AND circuit 603 outputs a logical product of the output signal from the AND circuit 602 and the operational mode signal S₃₀₁ to the stand-by indicator 56. The stand-by indicator 56 is turned off if the input signal indicates the "L" level, and flashes if the input signal indicates the "H" level.

To be more specific, the stand-by indicator 56 flashes upon stopping of the vehicle during the "engine-stopping/vehicle-moving mode", and accordingly, if the stand-by indicator 56 flashes, the driver can recognize that he is able to immediately move vehicle by actuating the accelerator even if the engine is stopped.

An ignition control unit 700 permits or prohibits the ignition operation performed by the ignition control device 61 under a specific condition in accordance with each operational mode. In the ignition control unit 700, a detection signal outputted from the vehicular speed sensor 55 is inputted in a running discriminating unit 701. The running discriminating unit 701 outputs a signal of "H" level if it discriminates that the vehicle is in the running state on the basis of the detection signal. An OR circuit 702 outputs a logical sum of the output signal from the running discriminating unit 701 and the signal indicating the ON/OFF state of the throttle switch 52. An OR circuit 703 outputs a logical sum of the output signal from the OR circuit 702 and the reversal signal of the operational mode signal S₃₀₁ to the ignition control device 61. The ignition control device 61 executes, if the input signal indicates the "H" level, the igniting operation for each specific timing, and it interrupts the igniting operation if the input signal indicates the "L" level.

With this configuration, since the reversal signal of the operational mode signal S₃₀₁ indicates the "H" level in the "engine-starting mode", the OR circuit 703 usually outputs a signal of "H" level. Accordingly, the ignition control device 61 usually executes the igniting operation in the "engine-starting mode". On the contrary, in the "engine-stopping/vehicle-moving mode", the igniting operation is executed under such a condition that the vehicle is on running or the throttle is opened, while the igniting operation is prohibited if the vehicle is in the stopping state and the throttle is closed.

A headlamp/buzzer control unit 800 automatically turns on/off the headlamp on the basis of the running state of the vehicle or the driver sitting state in accordance with each operational mode, and generates as a buzzer sound an alarm for giving caution to the driver.

A non-sitting continuation discriminating unit 801 receives the signal indicating the ON/OFF state of the sitting switch 54. The non-sitting continuation discriminating unit 801 includes two timers 8011 and 8012 for counting a driver non-sitting time. When the timers 8011 and 8012 each count a specific time-out period, the non-sitting continuation discriminating unit 801 outputs a signal S₈₀₁₁ or S₈₀₁₂ of "H" level. In this embodiment, the time-out period set in the timer 8011 is 3 sec, and the time-out period set in the timer 8012 is 1 sec.

A non-ignition continuation discriminating unit 802 includes two timers 8021 and 8022 for counting a non-ignition time. In the non-ignition state, the discriminating unit 802 immediately outputs a signal S₈₀₂₃ of "H" level. When the timers 8021 and 8022 each count a specific time-out period, the discriminating unit 802 outputs a signal S₈₀₂₁ or S₈₀₂₂ of "H" level. In this embodiment, the time-out period set in the timer 8021 is 3.5 min, and the time-out period set in the timer 8022 is 3 min.

An AND circuit 812 outputs a logical product of the output signal S_{S011} from the non-sitting continuation discriminating unit 801 and the output signal S₈₀₂₃ from the non-ignition continuation discriminating unit 802. An OR circuit 804 outputs a logical sum of the output signal S₈₀₂₁ from the non-ignition continuation discriminating unit 802 and the output signal from the AND circuit 812. An AND circuit 805 outputs a logical product of the output signal from the OR circuit 804 and the operational mode signal S₃₀₁ to a reset terminal R of a flip-flop 810.

An AND circuit 807 outputs a logical product of the signal indicating the ON/OFF state of the throttle switch 52 and the operational mode signal S₃₀₁. An Ne discriminating unit 806 receives the output signal from the Ne sensor 51, and outputs a signal of "H" level if the rotational number of the engine is equal to or less than a predetermined value. An AND circuit 808 outputs a logical product of the output signal from the Ne discriminating unit 806 and the reversal signal of the operational mode signal S₃₀₁. An OR circuit 809 outputs a logical sum of the output signals form the AND circuits 807 and 808 to a set terminal S of the flip-flop 810. An AND circuit 811 outputs a logical product of the output signal from a terminal Q of the flip-flop 810 and the signal indicating the ON/OFF state of the headlamp switch 57 to the headlamp relay 63. The headlamp relay..63 turns on the headlamp 69 if it receives a signal of "H" level, and turns off the headlamp 69 if it receives a signal of "L" level.

With this configuration, in the "engine-starting mode", since the reversal signal of the operational mode signal S₃₀₁ indicates the "H" level, the AND circuit 808 is turned into the enable state. Accordingly, if the rotational number of the engine is equal to or more than the predetermined value, the flip-flop 810 is set, so that the headlamp is turned on if the headlamp switch 57 is turned on.

In the "engine-stopping/vehicle moving mode", since the operational mode signal S₃₀₁ indicates the "H" level, each of the AND circuits 805 and 807 is turned into the enable state. Accordingly, if the output signal from the OR circuit 804 indicates the "H" level, the flip-flop 810 is reset, to automatically turn off the headlamp.

That is to say, the headlamp in the "engine-stopping/vehicle-moving mode" is turned off if the non-ignition state is continued for a time-out period (3.5 min in this embodiment) of the timer 8021 or more so that the output signal S₈₀₂₁ indicates the "H" level, or if the non-sitting state in the non-ignition state is continued for a time-out period (3 sec in this embodiment) of the timer 8011 or more so that the output signal from the AND circuit 812 indicates the "H" level.

As a result of examination by the present inventors, it is revealed that a vehicle stopping time for waiting for a signal light (blue) or a chance for right-turning in an intersection is substantially in a range of 30 sec to 2 min. Accordingly, a vehicle stopping state after an elapse of the above vehicle stopping time ranging from 30 sec to 2 min is highly estimated as a vehicle stopping state other than that for waiting for a signal light (blue) or a chance for right-turning, that is, as a vehicle stopping state in which the headlamp is not required to be left turned on. As a result, just as in this embodiment, by allowing the headlamp to be left turned on until the non-ignition state is continued for more than a predetermined time (for example, 3.5 min), it is possible to leave the headlamp turned on in the vehicle stopping state for waiting for a signal light (blue) or a chance for right-turning, and also to suppress the wasteful power consumption of the battery because the headlamp is automatically turned off when the vehicle stopping time exceeds 3.5 min.

The state in which the driver non-sitting state is detected after stopping of the vehicle is also highly estimated as a vehicle stopping state other than that for waiting for a signal light (blue) or a chance for right-turning. On the basis of the experience, however, it is highly estimated that a driver temporarily stands up while straddling the vehicle directly after stoppage of the vehicle at an intersection, and therefore, it may be undesirable to automatically turn off the headlamp simultaneously with detection of the driver non-sitting state. For this reason, in this embodiment, the control system is configured such that the non-sitting time in the non-ignition state is counted, and the headlamp is automatically turned off if the above non-sitting time exceeds a predetermined time (3 sec in this embodiment) estimated as an elapsed time after a driver goes apart from the vehicle.

In addition, when the throttle is opened in the vehicle-stopping state in the "engine-stopping/vehicle-moving mode", the output from the AND circuit 807 indicates the "H" level and the flip-flop 810 is set, and consequently the headlamp is automatically turned on.

An AND circuit 813 of the headlamp control unit 800 outputs, to a buzzer drive unit 814, a logical product of the output signal S₈₀₁₂ from a non-sitting continuation discriminating unit 801, the output signal S₈₀₂₃ from a non-ignition continuation discriminating unit 802, and the operational mode signal S₃₀₁. The AND circuit 815 outputs, to the buzzer drive unit 814, a logical product of the output signal S₈₀₂₂ from the non-ignition continuation discriminating unit 802, the operational mode signal S₃₀₁, and the signal indicating the state of the headlamp switch 57.

When the output signal from the AND circuit 813 indicates the "H" level, that is, when the non-sitting in the non-ignition state in the "engine-stopping/vehicle-moving mode" is continued for a time-out period (1 sec in this embodiment) of a timer 8012 or more, the buzzer drive unit 814 outputs a buzzer drive signal for repeatedly generating alarm sound at a cycle of ON-time (0.2 sec)/OFF-time (1.5 sec). At this time, the output of the buzzer drive signal is continued until the main switch 73 is turned off or the driver rides again on the vehicle.

When the output signal from the AND circuit 815 indicates the "H" level, that is, the headlamp switch 57 is in the ON state in the "engine-stopping/vehicle-moving mode" and also the non-ignition state is continued for a time-out period (3 min in this embodiment) of the timer 8022, the buzzer drive unit 814 outputs the same buzzer drive signal until the timer 8141 counts a predetermined time-out period. With this configuration, it eliminates the need for the operation for stopping the buzzer.

If the non-sitting state continued for 1 sec or more with the main switch left turned on is detected when the engine is automatically stopped, it is discriminated that the driver goes away from the vehicle without turning off the main switch, with a result that the buzzer 75 is actuated. Accordingly, the driver can recognize the fact that the main switch is left turned-on.

The buzzer 75 is actuated before the headlamp automatic turn-off condition upon vehicle stopping state (the non-ignition state is continued for 3.5 min or more) is established, for example, after the non-ignition state is continued for 3 min or more, so that the driver can previously recognize the automatic turn-off of the headlamp. That is to say, it is possible to prevent the headlamp from being automatically turned off without recognition of the driver.

In the above, the configuration has been described that when it is detected that the non-sitting state is continued for 1 sec or more with the main power source left turned on after the engine is automatically stopped, the buzzer is continuously actuated until the main switch 73 is turned off or the driver rides again on the vehicle; however, in the case where it is supposed that the driver goes away from the vehicle without cutoff of the main switch 73, for example, in the case where the vehicle is used for delivery service or bill collection service, the buzzer may be automatically stopped after an elapse of a predetermined time.

Further, in the above, the configuration has been described that the headlamp is automatically turned off when the ignition-off state or the non-sitting state of the driver is continued for a predetermined time or more; however, the light of the headlamp may be weakened by reducing the supplied current in place of turn-off of the headlamp, or the headlamp may be turned off and instead a position lamp may be turned on.

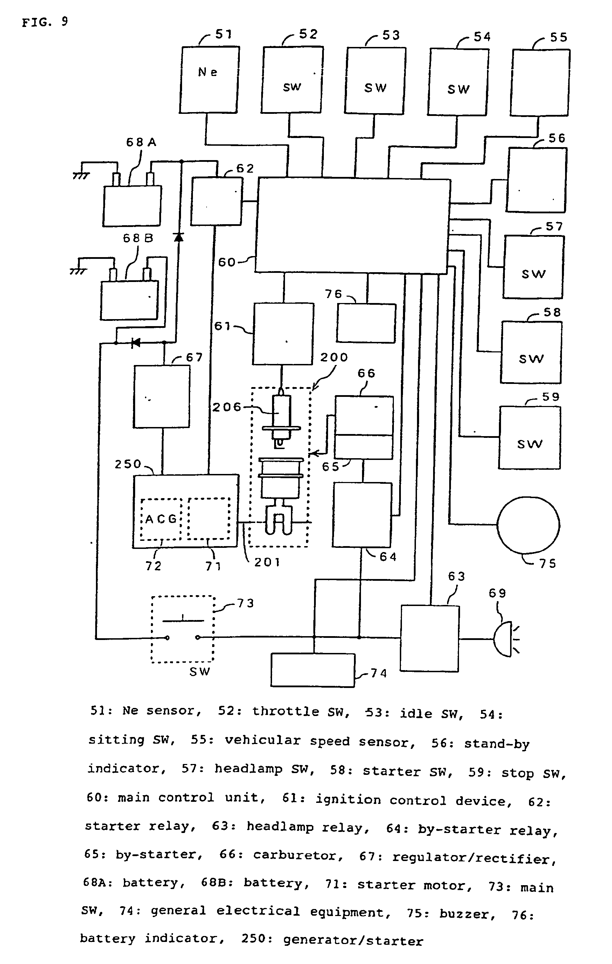

Fig. 9 is a block diagram showing the entire configuration of an engine starting/stopping control system according to another embodiment of the present invention, in which the same symbols as those described above designate the same or similar parts.

In this embodiment, a power generated by the AC generator 72 is charged in two batteries 68A and 68B via the regulator/rectifier 67. The battery 68A, which is specialized for starting an engine, supplies a drive current to the starter motor 71 if a starter relay 62 is made conductive. The battery 68B supplies load currents via the main switch 73 to the various electrical equipment 74, the main control unit 60 and the like.

In this way, since the battery 68A specialized for starting the engine is very small in power consumption and is usually kept in a full-charge state, it is possible to usually desirably start the engine irrespective of the charged amount of the battery 68B.

The invention provides a vehicle mounted with an engine stopping/starting control system which is configured to give caution to a driver who just goes apart from the vehicle without turning off a main power source when an engine is automatically stopped.

To achieve this, a vehicle has an engine stopping/starting control system for stopping an engine in operation in response to a specific vehicle stopping condition and re-starting the engine in stoppage in response to a specific vehicle starting operation. The control system includes a sitting switch SW54 for detecting whether or not a driver is sitting in a seat, and a headlamp/buzzer control unit 800 for controlling a buzzer 75. Detecting the non-sitting state of the driver with a main switch left turned on when the engine is automatically stopped, the headlamp/buzzer control unit 800 discriminates that the driver just goes apart from the vehicle with the main switch left turned on and actuates the buzzer 75.

## Claims

1. A vehicle mounted with an engine stopping/starting control system for automatically stopping an engine (200) in operation in response to a specific vehicle stopping condition without turning off a main power switch (73) of the vehicle, and restarting the engine in stoppage in response to a specific vehicle moving operation, wherein said system comprises:
stoppage detecting means (60) for detecting the stopping state of the engine;
riding detecting means (54) for detecting whether or not a driver is riding on said vehicle; and
alarm means (75) for generating an alarm for giving caution to the driver;
wherein said alarm means (75) is adapted to generate an alarm when the non-riding state of the driver in the automatically stopping state of the engine is detected,
**characterized in that** the vehicle is a motorcycle, wherein said system further comprises
headlamp control means (800) for detecting the stopping state of the engine and the non-riding state of the driver and automatically turning off a headlamp or weakening the light of the headlamp by reducing the supplied current on the basis of the detected result;
wherein said alarm means (75) is adapted to generate an alarm when the non-riding state of the driver in the stopping state of the engine (200) is continued for a first predetermined time or more, before said headlamp control means (800) automatically turns off said headlamp or weakens the light thereof having been in the ON state.

2. A motorcycle mounted with an engine stopping/starting control system according to claim 1, wherein said headlamp control means (800) is adapted to automatically turn off said headlamp or weaken the light thereof having been in the ON state on the basis of at least one of a condition that the stopping state of the engine is continued for a second predetermined time and a condition that the non-riding state of the driver in the engine stopping state is continued for a third predetermined time and
said alarm means (75) is adapted to generate an alarm when the stopping state of the engine is continued for a fourth predetermined time, shorter than said second predetermined time.

3. A motorcycle mounted with an engine stopping/starting control system according to claim 1 or 2, wherein said alarm generated before said headlamp is automatically turned off or the light thereof is weakened, is stopped after an elapse of a fifth predetermined time.

4. A motorcycle mounted with an engine stopping/starting control system according to any one of claims 1 to 3, wherein said alarm generated by said alarm means (75) is stopped when it is detected that a main power source (68) is cut off or the driver rides again on said motorcycle.

## Patentansprüche

1. Mit einem Motor-Stopp/Start-Steuersystem ausgestattetes Fahrzeug zum automatischen Stoppen eines laufenden Motors (200) in Antwort auf eine bestimmte Fahrzeugstoppbedingung, ohne einen Hauptstromschalter (73) des Fahrzeugs auszuschalten, und wieder anlassen des gestoppten Motors in Antwort auf eine bestimmte Fahrzeugbewegungsbedienung, worin das System umfasst:
ein Stopperfassungsmittel (60) zum Erfassen des Stoppzustands des Motors;
ein Sitzerfassungsmittel (54) zum Erfassen, ob ein Fahrer auf dem Fahrzeug sitzt oder nicht; und
ein Alarmmittel (75) zum Erzeugen eines Alarms, um dem Fahrer eine Warnung zu geben;
worin das Alarmmittel (75) dazu ausgelegt ist, einen Alarm zu erzeugen, wenn im automatischen Stoppzustand des Motors der Nichtsitzzustand des Fahrers erfasst wird,
**dadurch gekennzeichnet, dass** das Fahrzeug ein Kraftrad ist, worin das System ferner umfasst:
ein Scheinwerfersteuermittel (800) zum Erfassen des Stoppzustands des Motors und des Nichtsitzzustands des Fahrers und zum automatischen Ausschalten eines Scheinwerfers oder Abschwächen des Lichts des Scheinwerfers durch Reduzieren des zugeführten Stroms auf der Basis des erfassten Ergebnisses;
worin das Alarmmittel (75) dazu ausgelegt ist, einen Alarm zu erzeugen, wenn im Stoppzustand des Motors (200) der Nichtsitzzustand des Fahrers für eine erste vorbestimmte Zeit oder länger fortdauert, bevor das Scheinwerfersteuermittel (800) den Scheinwerfer, der im eingeschalteten Zustand gewesen ist, automatisch ausschaltet oder dessen Licht abschwächt.

2. Mit einem Motor-Stopp/Start-Steuersystem ausgestattetes Kraftrad gemäß Anspruch 1, worin das Scheinwerfersteuermittel (800) dazu ausgelegt ist, auf der Basis einer Bedingung, dass der Stoppzustand des Motors für eine zweite vorbestimmte Zeit fortdauert, und/oder einer Bedingung, dass der Nichtsitzzustand des Fahrers im Motorstoppzustand für eine dritte vorbestimmte Zeit fortdauert, den Scheinwerfer, der im eingeschalteten Zustand gewesen ist, automatisch auszuschalten oder dessen Licht abzuschwächen; und
das Alarmmittel (75), das dazu ausgelegt ist, einen Alarm zu erzeugen, wenn der Stoppzustand des Motors für eine vierte vorbestimmte Zeit fortdauert, die kürzer als die zweite vorbestimmte Zeit ist.

3. Mit einem Motor-Stopp/Start-Steuersystem ausgestattetes Kraftrad nach Anspruch 1 oder 2, worin der Alarm, welcher erzeugt wird, bevor der Scheinwerfer automatisch ausgeschaltet wird oder dessen Licht abgeschwächt wird, nach Ablauf einer fünften vorbestimmten Zeit gestoppt wird.

4. Mit einem Motor-Stopp/Start-Steuersystem ausgestattetes Kraftrad nach einem der Ansprüche 1 bis 3, worin der von dem Alarmmittel (75) erzeugte Alarm gestoppt wird, wenn festgestellt wird, dass die Hauptstromquelle (68) abgeschaltet ist oder der Fahrer wieder auf dem Kraftrad sitzt.

## Revendications

1. Véhicule équipé d'un système de commande du démarrage et de l'arrêt du moteur thermique, pour stopper automatiquement un moteur thermique (200) en fonctionnement, en réponse à une condition spécifique d'arrêt de véhicule, sans avoir à faire passer en position d'arrêt un commutateur d'énergie principal (73) du véhicule, et redémarrer le moteur thermique arrêté, en réponse à une opération spécifique de déplacement de véhicule, dans lequel ledit système comprend :
des moyens de détection d'arrêt (60), pour détecter l'état d'arrêt du moteur thermique ;
des moyens de détection de chevauchement (54), pour détecter si oui ou non un conducteur est monté en chevauchement sur ledit véhicule ; et
des moyens d'alarme (75), pour générer une alarme pour fournir un avertissement au conducteur ;
dans lequel lesdits moyens d'alarme (75) sont adaptés pour générer une alarme lorsque l'état de non chevauchement du conducteur à l'état d'arrêt automatique du moteur thermique est détecté,
**caractérisé en ce que** le véhicule est une motocyclette, dans lequel ledit système comprend en outre :
des moyens de commande de projecteur lumineux (800), pour détecter l'état d'arrêt du moteur thermique et l'état de non chevauchement du conducteur et, automatiquement, couper un projecteur lumineux ou affaiblir la lumière du projecteur lumineux par le biais d'une réduction du courant fourni, d'après le résultat détecté ;
dans lequel lesdits moyens d'alarme (75) sont adaptés pour générer une alarme lorsque l'état de non chevauchement du conducteur à l'état d'arrêt du moteur thermique (200) persiste pour une première période de temps prédéterminée, ou plus, avant que lesdits moyens de commande de projecteur lumineux (800) coupent automatiquement ledit projecteur lumineux ou affaiblissent sa lumière, ayant été à l'état MARCHE.

2. Motocyclette, équipée d'un système de commande du démarrage et de l'arrêt du moteur thermique selon la revendication 1, dans laquelle lesdits moyens de commande de projecteur lumineux (800) sont adaptés pour couper automatiquement ledit projecteur lumineux ou affaiblir sa lumière, tel qu'il était à l'état MARCHE, sur la base d'au moins l'une d'une condition selon laquelle l'état d'arrêt du moteur thermique est continué pour une deuxième période de temps prédéterminée, et une condition selon laquelle l'état de non chevauchement du conducteur, dans l'état d'arrêt du moteur thermique, est continué pour une troisième période de temps prédéterminée ; et
lesdits moyens d'alarme (75) sont adaptés pour générer une alarme lorsque l'état d'arrêt du moteur thermique est continué pour une quatrième période de temps prédéterminée, plus courte que ladite deuxième période de temps prédéterminée.

3. Motocyclette, équipée d'un système de commande du démarrage et de l'arrêt du moteur thermique selon la revendication 1 ou 2, dans laquelle ladite alarme, générée avant que ledit projecteur lumineux ait été automatiquement coupé, ou que sa lumière ait été affaiblie, est stoppée après expiration d'une cinquième période de temps prédéterminée.

4. Motocyclette, d'un système de commande du démarrage et de l'arrêt du moteur thermique selon l'une quelconque des revendications 1 à 3, dans laquelle ladite alarme, générée par lesdits moyens d'alarme (75), est stoppée lorsqu'il est détecté qu'une source d'énergie principale (68) est coupée, ou que le conducteur chevauche de nouveau ladite motocyclette.
